# EUROPÄISCHE PATENTSCHRIFT

(11) **EP 2 356 526 B1**
(45) Veröffentlichungstag und Bekanntmachung des Hinweises auf die Patenterteilung: **08.01.2020**
(21) Anmeldenummer: 09756266.4
(22) Anmeldetag: 20.11.2009
(51) Int. Cl.: G05B 19/042, G05B 23/02

(54) **SICHERHEITSSTEUERUNG UND VERFAHREN ZUM STEUERN EINER AUTOMATISIERTEN ANLAGE**
SAFETY CONTROL AND METHOD FOR CONTROLLING AN AUTOMATED SYSTEM
COMMANDE DE SÉCURITÉ ET PROCÉDÉ DE COMMANDE D'UNE INSTALLATION AUTOMATISÉE

(30) Priorität: 25.11.2008 DE 102008060011
(43) Veröffentlichungstag der Anmeldung: 17.08.2011
(73) Patentinhaber: Pilz GmbH & Co. KG, 73760 Ostfildern (DE)
(72) Erfinder: EHRHART, Helmut, 70372 Stuttgart (DE); REUSCH, Matthias, 72531 Hohenstein (DE)
(74) Vertreter: Witte, Weller & Partner Patentanwälte mbB
(86) Internationale Anmeldenummer: PCT/EP2009/008262
(87) Internationale Veröffentlichungsnummer: WO 2010/060572

(56) Entgegenhaltungen:
- EP-A1- 1 331 536
- EP-A1- 1 855 172
- EP-A2- 0 434 050
- EP-A2- 1 357 373
- US-A- 5 777 896
- US-A1- 2003 135 349
- US-A1- 2006 129 358

## Beschreibung

Die vorliegende Erfindung betrifft eine Sicherheitssteuerung und ein Verfahren zum Steuern einer automatisierten Anlage, die eine Vielzahl von Sensoren und eine Vielzahl von Aktoren umfasst.

Eine Sicherheitssteuerung im Sinne der vorliegenden Erfindung ist ein Gerät, oder eine Vorrichtung, das bzw. die von Sensoren gelieferte Eingangssignale aufnimmt und daraus durch logische Verknüpfungen und unter Umständen weitere Signal- oder Datenverarbeitungsschritte Ausgangssignale erzeugt. Die Ausgangssignale können Aktoren zugeführt werden, die dann in Abhängigkeit von den Eingangssignalen gezielte Aktionen oder Reaktionen in der Umgebung bewirken.

Ein bevorzugtes Anwendungsgebiet für derartige Sicherheitssteuerungen ist die Überwachung von Not-Aus-Tastern, Zwei-Hand-Steuerungen, Schutztüren oder Lichtgittern im Bereich der Maschinensicherheit. Derartige Sensoren werden verwendet, um beispielsweise eine Maschine, von der im Betrieb eine Gefahr für Menschen oder materielle Güter ausgeht, abzusichern. Beim Öffnen der Schutztür oder beim Betätigen des Not-Aus-Tasters wird jeweils ein Signal erzeugt, das der Sicherheitssteuerung als Eingangssignal zugeführt ist. In Reaktion darauf schaltet die Sicherheitssteuerung dann beispielsweise mit Hilfe eines Aktors den gefahrbringenden Teil der Maschine ab.

Charakteristisch an einer Sicherheitssteuerung ist im Gegensatz zu einer "normalen" Steuerung, dass die Sicherheitssteuerung selbst dann, wenn bei ihr oder einem mit ihr verbundenen Gerät eine Fehlfunktion auftritt, stets einen sicheren Zustand der gefahrbringenden Anlage oder Maschine gewährleistet. Daher werden bei Sicherheitssteuerungen extrem hohe Anforderungen an die eigene Fehlersicherheit gestellt, was einen erheblichen Aufwand bei der Entwicklung und Herstellung zur Folge hat.

In der Regel benötigen Sicherheitssteuerungen vor ihrer Verwendung eine besondere Zulassung durch zuständige Aufsichtsbehörden, wie beispielsweise in Deutschland durch die Berufsgenossenschaften oder den TÜV. Die Sicherheitssteuerung muss dabei vorgegebene Sicherheitsstandards einhalten, die beispielsweise in der Europäischen Norm EN 954-1 oder einer vergleichbaren Norm, beispielsweise der Norm IEC 6158 oder der Norm EN ISO 13849-1 niedergelegt sind. Im Folgenden wird daher unter einer Sicherheitssteuerung ein Gerät bzw. eine Vorrichtung verstanden, die zumindest die Sicherheitskategorie 3 der genannten Europäischen Norm EN 954-1 erfüllt.

Eine programmierbare Sicherheitssteuerung bietet dem Anwender die Möglichkeit, die logischen Verknüpfungen und ggf. weitere Signal- oder Datenverarbeitungsschritte mit Hilfe einer Software, dem sogenannten Anwenderprogramm, seinen Bedürfnissen entsprechend individuell festzulegen. Daraus resultiert eine große Flexibilität im Vergleich zu früheren Lösungen, bei denen die logischen Verknüpfungen durch eine definierte Verdrahtung zwischen verschiedenen Sicherheitsbausteinen erzeugt wurden. Ein Anwenderprogramm kann beispielsweise mit Hilfe eines handelsüblichen Personalcomputers (PC) und unter Verwendung entsprechend eingerichteter Softwareprogramme erstellt werden.

Neben dem eigentlichen Erkennen einer Fehlfunktion und dem Ergreifen entsprechender Maßnahmen, mit denen die gesteuerte Maschine oder Anlage in einen sicheren Zustand überführt wird, ist es auch wichtig, dem Bediener der gesteuerten Maschine oder Anlage oder einer anderen Person Informationen über eine vorliegende Fehlfunktion zukommen zu lassen. Hierzu wird bei bekannten Sicherheitssteuerungen eine die Fehlfunktion repräsentierende Diagnosemeldung mittels einer Anzeigeeinheit angezeigt. Dabei hängt die angezeigte Diagnosemeldung lediglich von der Fehlfunktion ab, die durch eine entsprechende Diagnoseeinheit festgestellt wurde. Das Erkennen einer Fehlfunktion entspricht dem Feststellen, welcher von mehreren Systemzuständen einer Sicherheitssteuerung zu einem definierten Zeitpunkt vorliegt.

Die bekannten Sicherheitssteuerungen und Verfahren gewährleisten zwar ein zuverlässiges Feststellen von Systemzuständen einer Sicherheitssteuerung und von Prozesszuständen einer zu steuernden Anlage, sie sind jedoch hinsichtlich der Informationsvermittlung, d.h. hinsichtlich der Vermittlung derjenigen Information, die die festgestellten Systemzustände und Prozesszustände repräsentiert, noch nicht optimal.

EP 1 855 172 A1 offenbart ein Verfahren zur Alarmunterdrückung in einer Prozessanlage und ein entsprechendes Steuerungssystem. Das Verfahren integriert Alarmunterdrückungsmechanismen mit der Möglichkeit, die Relevanz von Alarminformationen in Form von Prozessalarmen dynamisch zu bestimmen, um nichtrelevante Prozessalarme auszublenden. Das Alarmverarbeitungssystem entscheidet aufgrund einer paarweisen Korrelation aus jeweils einem Prozesszustand und einer Alarminformation in Verbindung mit einem jeweils zugeordneten Korrelationswert, welche Prozessalarme bei welchen Prozesszuständen angezeigt werden sollen und welche nicht. Ein Zustandsbaustein wandelt dafür einen codierten Zustand in einen ganzzahligen Wert von Null bis zweiunddreißig und übermittelt diesen an das Alarmverarbeitungssystem. Außerdem erzeugt der Zustandsbaustein ein boolesches Fehlersignal, das einen fehlerfreien Betrieb des Zustandsbausteins anzeigt.

Es ist daher eine Aufgabe der vorliegenden Erfindung, eine Sicherheitssteuerung und ein Verfahren der eingangs genannten Art weiterzubilden, um die Vermittlung derjenigen Information, die einen festgestellten Prozesszustand einer zu steuernden Anlage oder eines Systemzustandes einer Sicherheitssteuerung repräsentiert, einfacher und flexibler zu gestalten, und insbesondere die anzuzeigende Information an äußere Gegebenheiten anpassen zu können.

Diese Aufgabe wird durch eine Sicherheitssteuerung gemäß Anspruch 1 und ein Verfahren gemäß Anspruch 3 gelöst.

Der neuen Sicherheitssteuerung und dem neuen Verfahren liegt die Idee zugrunde, einen Betriebszustandsdatensatz, der bevorzugt sämtliche diagnoserelevanten Daten enthält, zur Anzeige von Diagnoseinformationen bereitzustellen. Zusätzlich weist der Betriebszustaridsdatensatz jedoch einen booleschen Statusanzeiger auf, der als boolesche Variable im Anwenderprogramm abgefragt und gelesen werden kann. Damit ist es möglich, Aktoren, wie etwa eine Warnleuchte oder einen Summer, in Abhängigkeit von dem Betriebszustandsdatensatz (und damit allenfalls mittelbar in Abhängigkeit von "echten" Sensorsignalen) anzusteuern. Die Steuereinheit erhält somit eine weitere Eingangsinformation, die gezielt alle zur System- oder Prozessdiagnose benötigten Informationen bündelt. Mit dem neuen Betriebszustandsdatensatz wird eine konsistente, systemweit einheitliche Diagnoseinformation bereitgestellt, die eine sehr flexible Anzeige und Auswahl von Diagnoseinformationen sowie eine gezielte Reaktion auf Betriebszustände ermöglicht.

Die mehreren Betriebszustände beinhalten zumindest einen Prozesszustand der zu steuernden Anlage und zumindest einen Systemzustand der Sicherheitssteuerung, wobei der Betriebszustandsdatensatz den Prozesszustand und den Systemzustand repräsentiert.

Systemzustand der Sicherheitssteuerung soll hier alle Zustände bezeichnen, die für die Sicherheitssteuerung und die damit verbundene Peripherie, wie etwa Sensoren und Aktoren, repräsentativ sind. Demgegenüber ist ein Prozesszustand der zu steuernden Anlage ein Zustand, den die zu steuernde Anlage im gesteuerten Prozess annehmen kann, wobei dieser Prozess durch das in der Sicherheitssteuerung ablaufende Anwenderprogramm definiert ist. Beispielsweise ist der Ausfall eines Sensors oder ein Kurzschluss in einer Leitung zu einem Sensor ein Systemzustand, während der Zustand "Tank leer" ein Prozesszustand bei einem Tanklager bezeichnet.

Die Kombination von Diagnoseinformationen zu Prozess- und Systemzuständen in einem gemeinsamen zentralen Datensatz vereinfacht den Zugriff auf Diagnoseinformation noch weiter, insbesondere wenn dieser Datensatz in dem Anwenderprogramm wie eine Variable verarbeitet wird. Das Anwenderprogramm kann zentral auf alle Diagnoserelevanten Informationen zugreifen.

Das Anwenderprogramm weist zumindest ein Sicherheitssteuerungsmodul auf, in dem sicherheitsrelevante Steuerungseingangssignale fehlersicher verarbeitet werden, und zumindest ein Standardsteuerungsmodul auf, in dem überwiegend prozessrelevante Steuerungseingangssignale verarbeitet werden.

Bei dieser Ausgestaltung umfasst die Vielzahl von Sensoren vorteilhafterweise eine erste Anzahl von Sensoren, die zur Erfassung sicherheitsrelevanter Größen ausgebildet sind, wobei diese sicherheitsrelevanten Größen mittels sicherheitsrelevanter Steuerungseingangssignale dem Sicherheitssteuerungsmodul zugeführt werden, und eine zweite Anzahl von Sensoren, die zur Erfassung von prozessrelevanten Größen ausgebildet sind, wobei diese prozessrelevanten Größen mittels prozessrelevanter Steuerungseingangssignale dem Standardsteuerungsmodul zugeführt werden. Des weiteren ist in dieser Ausgestaltung vorteilhaft vorgesehen, dass die Vielzahl von Steuerungsausgangssignalen eine erste Anzahl von Steuerungsausgangssignalen umfasst, die in dem Sicherheitssteuerungsmodul ermittelt werden, und die für die Ansteuerung einer ersten Anzahl von Aktoren bestimmt sind, die zur Durchführung sicherheitsrelevanter Aktionen ausgebildet sind, und eine zweite Anzahl von Steuerungsausgangssignalen umfasst, die in dem Standardsteuerungsmodul ermittelt werden, und die für die Ansteuerung einer zweiten Anzahl von Aktoren bestimmt sind, die für die Durchführung prozessrelevanter Aktionen ausgebildet sind. Dieser Aufbau des Anwenderprogramms gemäß dem das Anwenderprogramm zumindest ein Sicherheitssteuerungsmodul und zumindest eine Standardsteuerungsmodul umfasst, ermöglicht, das mit ein und demselben Anwenderprogramm sowohl Steuerungsaufgaben, die dem Sicherheitsteuerungsaspekt zugeordnet sind, als auch Steuerungsaufgaben, die dem Standardsteuerungsaspekt zugeordnet sind, bearbeitet werden können. Somit können mit einer gemäß diesem Aspekt ausgestalteten Sicherheitssteuerung sowohl Steuerungsaufgaben, die dem Sicherheitssteuerungsaspekt zugeordnet sind, als auch Steuerungsaufgaben, die dem Standardsteuerungsaspekt zugeordnet sind, realisiert werden. Dies hat den Vorteil, dass für eine umfassende Steuerung einer Anlage, d.h. für eine Steuerung, die sowohl den Sicherheitssteuerungsaspekt als auch den Standardsteuerungsaspekt umfasst, lediglich ein Steuergerät erforderlich ist, und nicht zwei Steuergeräte, von denen eines die Steuerungsaufgaben bearbeitet, die dem Sicherheitssteuerungsaspekt zugeordnet sind, und eines die Steuerungsaufgaben bearbeitet, die dem Standardsteuerungsaspekt zugeordnet sind. Somit reduziert sich auch der für die Verdrahtung erforderliche Aufwand. Insgesamt stellt diese Maßnahme eine kostengünstige Möglichkeit dar, eine umfassende Steuerung für eine Anlage zu realisieren. An dieser Stelle sei darauf hingewiesen, dass mit der Formulierung, dass in dem Standardsteuerungsmodul überwiegend prozessrelevante Steuerungseingangssignale verarbeitet werden, gemeint ist, dass in dem Standardsteuerungsmodul auch sicherheitsrelevante Steuerungseingangssignale verarbeitet werden können.

In einer Ausgestaltung beinhaltet der Betriebszustandsdatensatz eine Vielzahl von untereinander unterschiedlichen Diagnosemeldungen, wobei jede dieser Diagnosemeldungen den festgestellten Betriebszustand repräsentiert. Vorzugsweise repräsentiert jede dieser Diagnosemeldungen den festgestellten Betriebszustand in Abhängigkeit von einer ausgewählten Sonderbetriebsart und/oder in Abhängigkeit von einer Zugriffsberechtigung, und die Diagnosemeldungen werden in Abhängigkeit von der ausgewählten Sonderbetriebsart und/oder der Zugriffsberechtigung angezeigt.

Üblicherweise enthält eine Diagnosemeldung vier Informationsanteile: Einen "was"-Anteil, der darüber informiert, was passiert ist, d.h. was für eine Störung oder was für ein Fehler vorliegt. Einen "wo"-Anteil, der darüber informiert, wo die Störung oder der Fehler passiert ist. Einen "wie"-Anteil, der darüber informiert, wie die Störung oder der Fehler zu beheben ist. Einen "wer"-Anteil, der darüber informiert, wer die Störung oder den Fehler beheben kann. Es ist besonders vorteilhaft, die anzuzeigende Diagnosemeldung an die Zugriffsberechtigung, die der Person zugeordnet ist, die die Anzeigeeinheit abliest, anzupassen. Bei einem Bediener reicht es in der Regel aus, ihm mitzuteilen, was passiert bzw. defekt ist und wer die Störung beheben kann. Insbesondere die Information, wer die Störung beheben kann, wer also der richtige Ansprechpartner ist, führt zu einer Zeitersparnis und somit zu einer Kostenersparnis, da die zuständige Person direkt kontaktiert werden kann. Bei einem einfachen Bediener ist es nicht erforderlich, anzuzeigen, wie die Störung behoben werden kann, da er mangels Zugriffsberechtigung nicht in der Lage ist, die Störung zu beheben. Bei einem Instandhalter kann die Diagnosemeldung, sofern es sich um eine Störung handelt, die er aufgrund seiner Zugriffsberechtigung beheben kann, neben der Information, was passiert ist, auch eine Information darüber enthalten, wo die Störung aufgetreten ist und wie diese zu beheben ist. Sofern es sich um eine Störung handelt, die er aufgrund seiner Zugriffsberechtigung nicht beheben kann, reicht es aus, wenn die Diagnosemeldung eine Information darüber enthält, was für eine Störung vorliegt und wer diese beheben kann. Bei einem Einrichter, bei einem Ersteller des Anwenderprogramms und bei einem Hersteller der Sicherheitssteuerung wird eine Diagnosemeldung in der Regel eine Information darüber enthalten, was passiert ist, wo dies passiert ist, wie die Störung zu beheben ist und wer dies vornehmen kann. Dabei wird ausgehend vom Einrichter hin zum Ersteller des Anwenderprogramms und zum Hersteller der Sicherheitssteuerung der Informationsanteil, wie eine Störung zu beheben ist, zunehmen und gleichzeitig der Informationsanteil, der eine Störung beheben kann, abnehmen, da ausgehend vom Einrichter hin zum Ersteller eines Anwenderprogramms und zum Hersteller einer Sicherheitssteuerung die Eingriffsmöglichkeiten in die zu steuernde Anlage bzw. die Sicherheitssteuerung aufgrund der zunehmenden Zugriffsberechtigung anwächst. Verglichen mit dem Einrichter und dem Ersteller des Anwenderprogramms wird beim Hersteller der Sicherheitssteuerung der Schwerpunkt hinsichtlich des Informationsbestandteiles, was passiert ist, schwerpunktmäßig auf der Sicherheitssteuerung liegen. Bei einem Hersteller einer Sicherheitssteuerung betreffend die angezeigten Störungen beispielsweise in der Sicherheitssteuerung enthaltene Logikhardwarekomponenten oder das in der Sicherheitssteuerung implementierte Betriebssystem. Für einen Sicherheitsbeauftragten bestimmte Diagnosemeldungen werden schwerpunktmäßig Informationen darüber enthalten, was für Störungen aufgetreten sind, und ergänzend Informationen darüber, wann diese aufgetreten sind.

Auch in Betracht auf einen festgestellten Prozesszustand der zu steuernden Anlage ist es sehr effektiv, die den festgestellten Prozesszustand repräsentierende Diagnosemeldung in Abhängigkeit der erfassten Zugriffsberechtigung zu ermitteln. Die einen festgestellten Prozesszustand repräsentierende Diagnosemeldung enthält eine Information darüber, welchen durch das Anwenderprogramm definierten Zustand die zu steuernde Anlage einnimmt. Auch in diesem Fall bietet es sich an, die mittels der Anzeigeeinheit angezeigte Information inhaltlich an denjenigen anzupassen, der die Diagnosemeldung an der Anzeigeeinheit abliest. So ist es für einen Bediener, einen Instandhalter und einen Sicherheitsbeauftragten von großer Bedeutung, über einzelne Prozesszustände, die zu steuernde Anlage zu einem definierten Zeitpunkt einnimmt, unterrichtet zu werden. Wohingegen für einen Einsteller, einen Ersteller eines Anwenderprogramms und den Hersteller einer Sicherheitssteuerung dies weniger wichtig ist. Bei diesen Personen bietet es sich beispielsweise an, Diagnosemeldungen, die einen Prozesszustand repräsentieren, auf den Informationsgehalt "fehlerfreier Betrieb" oder "fehlerhafter Betrieb" zu reduzieren. Unter Umständen kann sogar auf die Anzeige solcher Diagnosemeldungen verzichtet werden. Insgesamt wird dadurch die Ablesbarkeit bzw. Übersichtlichkeit an einer Anzeigeeinheit erhöht.

Auch in Betracht auf einen festgestellten Prozesszustand der zu steuernden Anlage ist es von Vorteil, die diesen Prozesszustand repräsentierende Diagnosemeldung in Abhängigkeit der ausgewählten Sonderbetriebsart zu ermitteln. Wird die Anlage im Automatikbetrieb betrieben, so sollten sämtliche Diagnosemeldungen, die festgestellte Prozesszustände betreffen, angezeigt werden. Dabei empfiehlt es sich jedoch, den Informationsgehalt der Diagnosemeldung an die Rolle des Lesers, dem die Diagnosemeldung mittels einer Anzeigeeinheit angezeigt wird, anzupassen. So reicht es beispielsweise aus, dem Bediener einer Anlage mitzuteilen, dass ein bestimmter Flüssigkeitsbehälter aufzufüllen ist. Dagegen kann einem Instandhalter zusätzlich mitgeteilt werden, wo sich dieser Behälter in der Anlage befindet und wo beispielsweise die nachzufüllende Flüssigkeit bevorratet ist. Für einen Sicherheitsbeauftragten kann die zu vermittelnde Information beispielsweise hinsichtlich der von ihm vorzunehmenden Auswertungen aufbereitet werden. Die vorstehenden Ausführungen zeigen, dass es von besonderem Vorteil ist, Diagnosemeldungen sowohl in Abhängigkeit der ausgewählten Sonderbetriebsart als auch in Abhängigkeit der erfassten Zugriffsberechtigung zu ermitteln. Dies vor allem deshalb, weil die Zugriffsberechtigung, die einer die Anzeigeeinheit ablesenden Person zugeordnet ist, nicht zwangsläufig mit der ausgewählten Sonderbetriebsart korrelieren muss, wie dies die vorstehenden Ausführungen aufzeigen. Wird die Anlage in dem Einrichtbetrieb betrieben, so bietet es sich beispielsweise an, Diagnosemeldungen, die Prozesszustände repräsentieren, die beispielsweise auf eine geöffnete Schutztüre zurückgehen, zu unterbinden. Dies deshalb, weil diese Diagnosemeldungen keinen Informationsgehalt haben, der über den Kenntnisstand des Einrichters, der im Rahmen des Einrichtbetriebes Maßnahmen an der zu steuernden Anlage vornimmt, hinausgehen. Der Einrichter weiß, dass die Schutztüre geöffnet ist. Dahingegen können speziell auf den Einrichtbetrieb abgestimmte Diagnosemeldungen angezeigt werden, die beispielsweise einen Informationsgehalt dahingehend enthalten, ob ein vom Einrichter geplanter Bewegungsablauf mit den Gegebenheiten der Maschine vereinbar ist. Wir eine Anlage im Wochenendbetrieb betrieben, so empfiehlt es sich, Diagnosemeldungen, die Prozesszustände repräsentieren, die von aufgrund des Wochenendbetriebes abgeschalteten Anlagenteilen herrühren, zu unterbinden, da diese Diagnosemeldungen bei dieser Sonderbetriebsart nicht beachtet werden müssen.

Auch ist es in Betracht auf einen festgestellten Systemzustand der Sicherheitssteuerung besonders effektiv, Diagnosemeldungen, die einen Systemzustand repräsentieren, in Abhängigkeit der ausgewählten Sonderbetriebsart zu ermitteln. Wird eine Anlage im Automatikbetrieb betrieben, so sollten sämtliche Diagnosemeldungen, die Systemzustände repräsentieren, angezeigt werden. Auch ist es hierbei in der Regel erforderlich, neben der Information, was wo passiert ist, auch anzugeben, wer die Störung beheben kann. Wird dagegen die Anlage in einer Betriebsart betrieben, in der Reparaturarbeiten an der Anlage vorgenommen werden können, so ist es nicht erforderlich, dass Diagnosemeldungen, die einen Systemzustand repräsentieren, Angaben darüber enthalten, wer eine Störung beheben kann, da für gewöhnlich Personen, die die Reparaturen vornehmen, über die entsprechende Befähigung verfügen. In solch einem Fall ist es vielmehr von Vorteil, Information darüber, was zur Behebung der Störung durchzuführen ist, anzuzeigen. Ebenso kann es von Vorteil sein, Datenblätter oder ähnliche Informationen über eine zu reparierende oder zu ersetzende Komponente anzuzeigen.

Die vorstehenden Ausführungen zeigen, dass Diagnosemeldungen mit dem neuen Ansatz sehr flexibel angezeigt werden können.

In einer weiteren Ausgestaltung der Erfindung repräsentiert der Systemzustand einen gestörten Aktor und/oder Sensor.

Gerade bei Diagnosemeldungen, die einen gestörten Aktor und/oder Sensor repräsentieren, ist es von Vorteil, die zu vermittelnde Information an die Rolle desjenigen anzupassen, der die Information liest. So ist es beispielsweise für einen Bediener einer Anlage ausreichend, darüber informiert zu werden, dass ein gestörter Aktor oder ein gestörter Sensor vorliegt. Dahingegen ist es sinnvoll, einem Instandhalter zusätzliche Informationen anzuzeigen. Hierbei kann es sich beispielsweise um eine Information darüber handeln, welcher Aktor oder welcher Sensor gestört ist. Mit Hilfe solche einer bauteilspezifischen Information ist es dem Instandhalter möglich, einen raschen Austausch des defekten Bauteils vornehmen zu können. Bei einem gestörten Aktor oder gestörten Sensor soll es sich um einen Aktor oder Sensor handeln, der defekt ist oder aus einem anderen Grund nicht eindeutig auswertbar ist. An dieser Stelle sei ausgeführt, was unter einem Sensor zu verstehen ist: Bei einem Sensor kann es sich ausschließlich um eine Erfassungseinheit handeln, mit der eine physikalische Größe erfasst werden kann. Ein Sensor kann aber auch als Kombination aus solch einer Erfassungseinheit und einer Signalverarbeitungseinheit aufgebaut sein, wobei die Signalverarbeitungseinheit dazu ausgebildet ist, verschiedene Signalaufbereitungsmaßnahmen durchzuführen, beispielsweise eine Analog/Digital-Wandlung oder eine Signalverstärkung.

In einer weiteren Ausgestaltung der zuvor genannten Maßnahme ist die Diagnoseauserteeinheit dazu ausgebildet, die Diagnosemeldung zusätzlich in Abhängigkeit einer Ortsangabe zu ermitteln, wobei die Ortsangabe den Einbauort des Aktors und/oder des Sensors innerhalb der Anlage repräsentiert.

Gerade bei einer Ortsangabe ist es von besonderem Vorteil, diese in Abhängigkeit von der Rolle der eine Anzeigeeinheit ablesenden Person in eine Diagnosemeldung aufzunehmen oder unberücksichtigt zu lassen. So ist es für einen Bediener einer Anlage unerheblich, wo sich ein defekter Sensor oder ein defekter Aktor befindet, da er mangels Zugriffsberechtigung einen Austausch nicht vornehmen kann. Folglich kann im Falle eines Bedieners eine Ortsangabe in einer Diagnosemeldung entfallen. Das Weglassen der Ortsangabe führt zu einer gesteigerten Übersichtlichkeit der mittels einer Anzeigeeinheit angezeigten Information. Dahingegen ist für einen Instandhalter eine Ortsangabe eine nützliche Information, da es ihm dadurch möglich ist, einen defekten Sensor oder einen defekten Aktor rasch auszutauschen. Folglich sollte für einen Instandhalter eine Ortsangabe in einer Diagnosemeldung enthalten sein.

In einer weiteren Ausgestaltung der Erfindung wird das Anwenderprogramm durch Bereitstellen einer Vielzahl von Softwarekomponenten erstellt, wobei die Vielzahl der Softwarekomponenten einer Vielzahl von der zu steuernden automatisierten Anlage enthaltenen Vielzahl von Anlagenhardwarekomponenten entsprechen.

Aufgrund dieser Maßnahme ist es möglich, ein Anwenderprogramm in besonders einfacher und übersichtlicher Art und Weise zu erstellen. Dies trägt zu einer höheren Fehlersicherheit der Programmierung einer Sicherheitssteuerung bei.

Bei der Anpassung der Diagnosemeldung an die eine Anzeigeeinheit ablesende Person gilt es nun festzulegen, welcher dieser viel Informationsanteile in der Diagnosemeldung überhaupt enthalten sein soll und wie detailliert der einzelne Informationsanteil ausgeführt sein soll. Beides kann durch Auswertung der Zugriffsberechtigung, die der Person zugeordnet ist, festgelegt werden. Für einen Bediener reicht es aus, wenn dieser eine Information darüber erhält, was für eine Störung vorliegt, und wer diese beheben kann. D.h. eine für einen Bediener bestimmte Diagnosemeldung enthält einen "was"-Anteil und einen "wer"-Anteil. Für einen Instandhalter, einen Ersteller eines Anwenderprogramms und einen Hersteller der Sicherheitssteuerung ist neben der Information was wo passiert ist zusätzlich die Information, wie die Störung oder der Fehler behoben werden kann, von Bedeutung. Folglich enthält eine für diese Person bestimmte Diagnosemeldung neben einem "was"-Anteil und einem "wo"-Anteil zusätzlich auch einen "wie"-Anteil. Dabei wird der Detailliertheitsgrad des "wie"-Anteils an die durch die Zugriffsberechtigung festgelegten Möglichkeiten, Eingriffe an der Anlage und/oder an der Sicherheitssteuerung vornehmen zu können, angepasst. Diese Anpassung gilt auch für den "was"-Anteil und den "wo"-Anteil. So kann beispielsweise dem Hersteller der Sicherheitssteuerung konkret angezeigt werden, welche in der Steuerungseinrichtung als solche enthaltene Logikkomponente defekt ist bzw. welches Modul des in der Sicherheitssteuerung hinterlegten Betriebssystems fehlerhaft ist. Wohingegen es ausreicht, dem Ersteller eines Anwenderprogramms lediglich anzuzeigen, dass ein Fehler in der Sicherheitssteuerung vorliegt. Die Berücksichtigung der erfassten Zugriffsberechtigung ermöglicht hinsichtlich eines festgestellten Systemzustandes eine besonders effektive Anpassung einer Diagnosemeldung an die eine Anzeigeeinheit ablesende Person. Wohingegen hinsichtlich eines festgestellten Prozesszustandes die Berücksichtigung einer ausgewählten Sonderbetriebsart eine besonders effektive Anpassung einer Diagnosemeldung an die eine Anzeigeeinheit ablesende Person ermöglicht.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
Fig. 1 eine schematische Darstellung einer neuen Sicherheitssteuerung in Verbindung mit einer zu steuernden Anlage, und
Fig. 2 in einer schematischen Darstellung eine in der Sicherheitssteuerung enthaltene Diagnoseauswahleinheit.

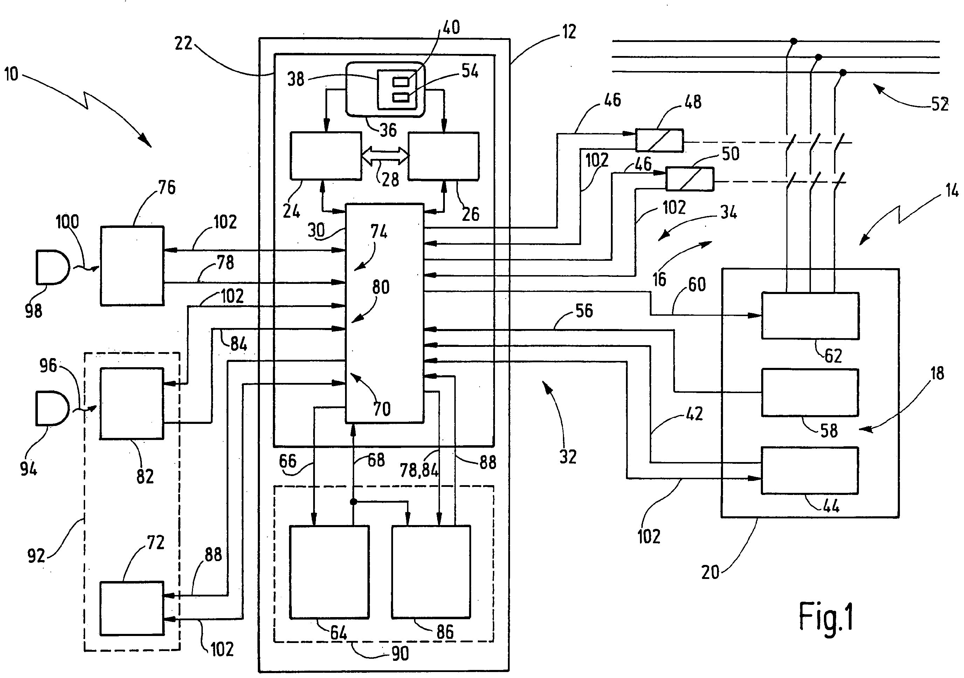

In Fig. 1 ist eine in ihrer Gesamtheit mit der Bezugsziffer 10 bezeichnete Sicherheitsschaltung dargestellt, die eine Sicherheitssteuerung 12 aufweist, die dazu ausgebildet ist, eine Anlage 14 zu steuern. Die Anlage 14 umfasst eine Vielzahl von Aktoren 16 und eine Vielzahl von Sensoren. 18 Exemplarisch ist ein in der Anlage 14 enthaltener Verbraucher 20 dargestellt, bei dem es sich beispielsweise um einen Roboter handeln kann.

Die Sicherheitssteuerung 12 umfasst eine Steuereinheit 22. Die Steuereinheit 22 ist zweikanalig-redundant aufgebaut, um die erforderliche Fehlersicherheit zum Steuern sicherheitskritischer Prozesse zu erreichen. Stellvertretend für den zweikanaligen Aufbau sind in Fig. 1 zwei voneinander getrennte Prozessoren 24, 26 dargestellt, die über eine bidirektionale Kommunikationsschnittstelle 28 miteinander in Verbindung stehen, um sich gegenseitig kontrollieren und Daten austauschen zu können. Bevorzugt sind die beiden Kanäle der Steuereinheit 22 und die beiden Prozessoren 24, 26 diversitär, d.h. verschieden voneinander aufgebaut, um systematische Fehler weitgehend auszuschließen.

Mit der Bezugsziffer 30 ist eine Ein-/Ausgabeeinheit bezeichnet, die mit jedem der beiden Prozessoren 24, 26 in Verbindung steht. Die Ein-/Ausgabeeinheit 30 nimmt eine Vielzahl 32 von Steuerungseingangssignalen von der Vielzahl 18 von Sensoren auf und leitet diese in einem angepassten Datenformat an jeden der beiden Prozessoren 24, 26 weiter. Ferner erzeugt die Ein-/Ausgabeeinheit in Abhängigkeit von den Prozessoren 24, 26 eine Vielzahl 34 von Steuerungsausgangssignalen, mit denen die Vielzahl 16 von Aktoren angesteuert werden.

Mit der Bezugsziffer 36 ist eine Chipkarte bezeichnet, auf der ein Anwenderprogramm 38 abgespeichert wird. Das Anwenderprogramm 38 wird mit Hilfe eines Programmiertools erstellt. Bei dem Programmiertool handelt es sich beispielsweise um ein Computerprogramm, welches auf einem herkömmlichen PC ausgeführt werden kann. Die Verwendung einer Chipkarte 36 als Speichermedium ermöglicht dabei einen einfachen Austausch des Anwenderprogramms 38 auch ohne direkten Anschluss an den PC, auf dem das Programmiertool ausgeführt wird. Alternativ hierzu kann das Anwenderprogramm 38 auch in einem fest in der Steuereinheit 22 eingebauten Speicher, beispielsweise einem EEPROM, abgespeichert sein.

Das Anwenderprogramm 38 legt die von der Sicherheitssteuerung 12 durchzuführenden Steuerungsaufgaben fest. Hierzu enthält das Anwenderprogramm 38 ein Sicherheitssteuerungsmodul 40, in dem diejenigen Steuerungsaufgaben durchgeführt werden, die dem Sicherheitssteuerungsaspekt zugeordnet sind. In dem Sicherheitssteuerungsmodul 40 werden sicherheitsrelevante Steuerungseingangssignale 42, die von dem Sicherheitssteuerungsaspekt zugeordneten Sicherheitssensoren 44 erzeugt werden, fehlersicher verarbeitet. Bei den Sicherheitssensoren 44 handelt es sich beispielsweise um Not-Aus-Taster, Zwei-Hand-Steuerungen, Schutztüren, Drehzahlüberwachungsgeräte oder andere Sensoren zur Aufnahme sicherheitsrelevanter Parameter. Gemäß den im Sicherheitssteuerungsaspekt zugeordneten Steuerungsaufgaben werden in Abhängigkeit der sicherheitsrelevanten Steuerungseingangssignale 42 sicherheitsrelevante Steuerungsausgangssignale 46 erzeugt, mit denen Sicherheitsaktoren 48, 50, den Sicherheitssteuerungsaspekt zugeordnete Aktoren, angesteuert werden. Bei den Sicherheitsaktoren 48, 50 handelt es sich beispielsweise um sogenannte Schütze, deren Arbeitskontakte in der Verbindung zwischen einer Stromversorgung 52 und dem Verbraucher 20 angeordnet sind. Über die Sicherheitsaktoren 48, 50 kann die Stromversorgung des Verbrauchers 20 abgeschaltet werden, wodurch es möglich ist, bei Auftritt einer entsprechenden Fehlfunktion zumindest den Verbraucher 20 in einen sicheren Zustand zu überführen.

Darüber hinaus weist das Anwenderprogramm 38 ein Standardsteuerungsmodul 54 auf, mit dem diejenigen Steuerungsaufgaben durchgeführt werden, die dem Standardsteuerungsaspekt zugeordnet sind. Hierzu werden in dem Standardsteuerungsmodul 54 prozessrelevante Steuerungseingangssignale 56 verarbeitet, die von Standardsensoren 58 erzeugt werden. Bei den Standardsensoren 58 handelt es sich um solche Sensoren, die beispielsweise für eine Antriebsregelung benötigte Eingangsgrößen erfassen. Hierbei kann es sich beispielsweise um Drehzahlen, wie Winkel oder Geschwindigkeiten handeln. In Abhängigkeit der prozessrelevanten Steuerungseingangssignale 56 werden gemäß den dem Standardsteuerungsaspekt zugeordneten Steuerungsaufgaben prozessrelevante Steuerungsausgangssignale 60 erzeugt, die Standardaktoren 62 zugeführt werden. Bei den Standardaktoren 62 kann es sich beispielsweise um Motoren oder Stellzylinder handeln.

Der im Ausführungsbeispiel gewählte Aufbau des Anwenderprogramms 38, gemäß dem dieses ein Sicherheitssteuerungsmodul 40 und ein Standardsteuerungsmodul 54 enthält, weswegen von der Steuereinheit 22 sowohl Steuerungsaufgaben, die dem Sicherheitssteuerungsaspekt zugeordnet sind als auch Steuerungsaufgaben, die dem Standardsteuerungsaspekt zugeordnet sind, durchgeführt werden, soll keine einschränkende Wirkung haben. Es ist auch denkbar, dass die Steuereinheit 22 lediglich Steuerungsaufgaben durchführt, die dem Sicherheitssteuerungsaspekt zugeordnet sind. In diesem Fall enthält das Anwenderprogramm 38 kein Standardsteuerungsmodul 54.

Die Ein-/Ausgabeeinheit 30 dient auch der Anbindung weiterer in der Sicherheitssteuerung 12 enthaltener Komponenten an die beiden Prozessoren 24, 26. So werden einer Diagnoseauswerteeinheit 64 hier über die Ein-/Ausgabeeinheit 30 eine Anzahl 66 von Diagnoseeingangssignalen zugeführt. Die Diagnoseauswerteeinheit 64 ist dazu ausgebildet, in Abhängigkeit von der Anzahl 66 von Diagnoseeingangssignalen festzustellen, welcher von mehreren Betriebszuständen zu einem definierten Zeitpunkt vorliegt. Die mehreren Betriebszustände beinhalten zumindest einen Prozesszustand der zu steuernden Anlage 14 und zumindest einen Systemzustand der Sicherheitssteuerung 12. Der Systemzustand beinhaltet nicht nur die in der Sicherheitssteuerung 12 enthaltenen Komponenten erfassen, sondern auch sämtliche mit der Sicherheitssteuerung 12 elektrisch verbundenen Einheiten. Hierbei handelt es sich um die Sicherheitssensoren 44, die Sicherheitsaktoren 48, 50, die Standardsensoren 58, die Standardaktoren 62 sowie eine noch zu beschreibende Anzeigeeinheit und noch zu beschreibende Meldegeräte. Ebenfalls soll der Systemzustand sämtliche zwischen der Sicherheitssteuerung 12 und den vorstehend aufgezählten Einheiten vorhandenen Verdrahtungen umfassen.

Die Diagnoseauswerteeinheit 64 erzeugt einen Betriebszustandsdatensatz 68, der einen festgestellten Betriebszustand repräsentiert. Das Betriebszustandsdatensatz 68 beinhaltet eine Vielzahl von Diagnosedaten und einen booleschen Statusanzeiger, der als boolesche Variable einen ersten Zustand, wie etwa "gültig", und einen zweiten Zustand, etwa "ungültig" annehmen kann. Der Statusanzeiger signalisiert damit, ob ein bestimmter Betriebszustand tatsächlich vorliegt oder nicht. Entscheidend ist hier, dass der Betriebszustandsdatensatz 68 mit dem booleschen Statusanzeiger der Ein-/Ausgabeeinheit 30 zugeführt ist. Somit kann das in der Steuereinheit ausgeführte Anwenderprogramm auf den Betriebszustandsdatensatz 68 mit dem booleschen Statusanzeiger zugreifen und dem festgestellten Betriebszustand entsprechende Maßnahmen auslösen.

Die Sicherheitssteuerung 12 umfasst ferner eine Schnittstelle 70 für eine Anzeigeeinheit 72. Die Anzeigeeinheit 72 ist dazu ausgebildet, Diagnosemeldungen anzuzeigen.

Ferner umfasst die Sicherheitssteuerung 12 eine Schnittstelle 74 für eine Betriebsartenwahleinheit 76. Die Betriebsartenwahleinheit 76 ist dazu ausgebildet, eine von mehreren untereinander unterschiedlichen Sonderbetriebsarten auszuwählen, wobei sich die Sonderbetriebsarten jeweils von dem Automatikbetrieb unterscheiden. Die Betriebsartenwahleinheit 76 stellt ein Sonderbetriebsartensignal 78 bereit, welches die ausgewählte Sonderbetriebsart repräsentiert. Das Sonderbetriebsartensignal 78 wird der Steuereinheit 22 zugeführt, um die Anlage 14 in der ausgewählten Sonderbetriebsart zu betreiben.

Ferner weist die Sicherheitssteuerung 12 eine Schnittstelle 80 für eine Erfassungseinheit 82 auf. Die Erfassungseinheit ist dazu ausgebildet, eine Zugriffsberechtigung zu erfassen, die einer mit der Sicherheitssteuerung 12 interagierenden Person, insbesondere einer die Anzeigeeinheit 72 ablesenden Person, zugeordnet ist. Die Erfassungseinheit 82 stellt ein Zugriffsberechtigungssignal 84 bereit, welches die erfasste Zugriffsberechtigung repräsentiert.

Darüber hinaus weist die Sicherheitssteuerung 12 eine Diagnoseauswahleinheit 86 auf. Der Diagnoseauswahleinheit 86 ist der Betriebszustandsdatensatz 68 zugeführt. Zusätzlich wird der Diagnoseauswahleinheit 86 das Sonderbetriebsartensignal 78 und/oder das Zugriffsberechtigungssignal 84 über die Ein-/Ausgabeeinheit 30 zugeführt. In Abhängigkeit des festgestellten Betriebszustands und in Abhängigkeit der ausgewählten Sonderbetriebsart und/oder der erfassten Zugriffsberechtigung ermittelt die Diagnoseauswahleinheit 86 eine geeignete Diagnosemeldung. Die Diagnoseauswahleinheit 86 erzeugt ein die Diagnosemeldung repräsentierendes Diagnosesignal 88, welches der Anzeigeeinheit 72 über die Ein-/Ausgabeeinheit 30 zum Anzeigen der Diagnosemeldung zugeführt wird. Die Diagnoseauswerteeinheit 64 und die Diagnoseauswahleinheit 86 können zu einer Diagnoseeinheit 90 zusammengefasst sein, was durch die strichlinierte Darstellung angedeutet ist.

Die Anzeigeeinheit 72 und die Erfassungseinheit 82 können zu einer baulichen Einheit 92 zusammengefasst sein, was durch die strichlinierte Darstellung angedeutet ist. Vorteilhafterweise bietet es sich an, die Erfassungseinheit 82 in die Anzeigeeinheit 72 zu integrieren.

Die Erfassungseinheit 82 ist dazu ausgebildet, die Zugriffsberechtigung durch Wechselwirkung mit einer mobilen Zugriffsberechtigungseinheit 94 zu erfassen, was durch einen Pfeil 96 angedeutet ist. Für die Erfassungseinheit 82 und somit auch für die mobile Zugriffsberechtigungseinheit 94 sind verschiedene Ausgestaltungen denkbar. In einer ersten Ausgestaltung ist die mobile Zugriffsberechtigungseinheit 94 als mechanischer Schlüssel ausgeführt, der in eine Schlüsselaufnahme, die in der Erfassungseinheit 82 angeordnet ist, eingebracht werden kann. Diese erste Ausgestaltung entspricht einem mechanisch ausgeführten Betriebsartenwahlschalter. In einer zweiten Ausgestaltung kann die mobile Zugriffsberechtigungseinheit 94 als Transponder ausgeführt sein, dessen Daten von der als Lesegerät ausgeführten Erfassungseinheit 82 ausgelesen werden können. Der Transponder enthält Zugriffsberechtigungsdaten, die die Zugriffsberechtigung repräsentieren. Es ist eine dritte Ausgestaltung denkbar, die eine Kombination der ersten Ausgestaltung und der zweiten Ausgestaltung darstellt. D.h. der mechanische Schlüssel enthält einen Transponder und die Erfassungseinheit 82 enthält im Bereich der Schlüsselaufnahme ein Lesegerät für den Transponder. Ferner ist eine vierte Ausgestaltung denkbar, in der die Erfassungseinheit 82 eine Anzahl von Eingabeelementen aufweist, über die die Zugriffsberechtigung eingegeben werden kann. Hierbei ist die Erfassungseinheit 82 beispielsweise als alphanumerische Eingabeeinheit ausgeführt. In dieser Ausgestaltung ist eine mobile Zugriffsberechtigungseinheit 94 nicht erforderlich. Die Aufzählungsreihenfolge der einzelnen Ausgestaltungen soll keine Wertung hinsichtlich deren Einsatzmöglichkeiten darstellen.

Die Betriebsartenwahleinheit 76 ist dazu ausgebildet, die Sonderbetriebsart durch Wechselwirkung mit einer mobilen Sonderbetriebsarteneinheit 98 auszuwählen, was durch eine Pfeil 100 dargestellt ist. Die mobile Sonderbetriebsarteneinheit 98 kann als Transponder ausgebildet sein, der Sonderbetriebsartdaten enthält, die eine definierte Sonderbetriebsart repräsentieren. In diesem Fall ist die Betriebsartenwahleinheit 76 als Lesegerät ausgebildet, mit dem die Sonderbetriebsartdaten von dem Transponder ausgelesen werden können.

Die Betriebsartenwahleinheit 76 und die Erfassungseinheit 82 werden üblicherweise als Meldegeräte bezeichnet.

Über die Ein-/Ausgabeeinheit 30 werden zwischen der Sicherheitssteuerung 12 und den Sicherheitssensoren 44, den Sicherheitsaktoren 48, 50, der Anzeigeeinheit 72, der Betriebsartenwahleinheit 76 und der Erfassungseinheit 82 Testsignale 102 ausgetauscht. Mit Hilfe der Testsignale 102 kann in der Sicherheitssteuerung 12 festgestellt werden, ob die an sie angeschlossenen Einheiten und Komponenten fehlerfrei arbeiten, was erforderlich ist, da ein sicherer Zustand der zu steuernden Anlage 14 gewährleistet sein muss, sobald an einem mit der Sicherheitssteuerung 12 verbundenen Gerät eine Fehlfunktion auftritt.

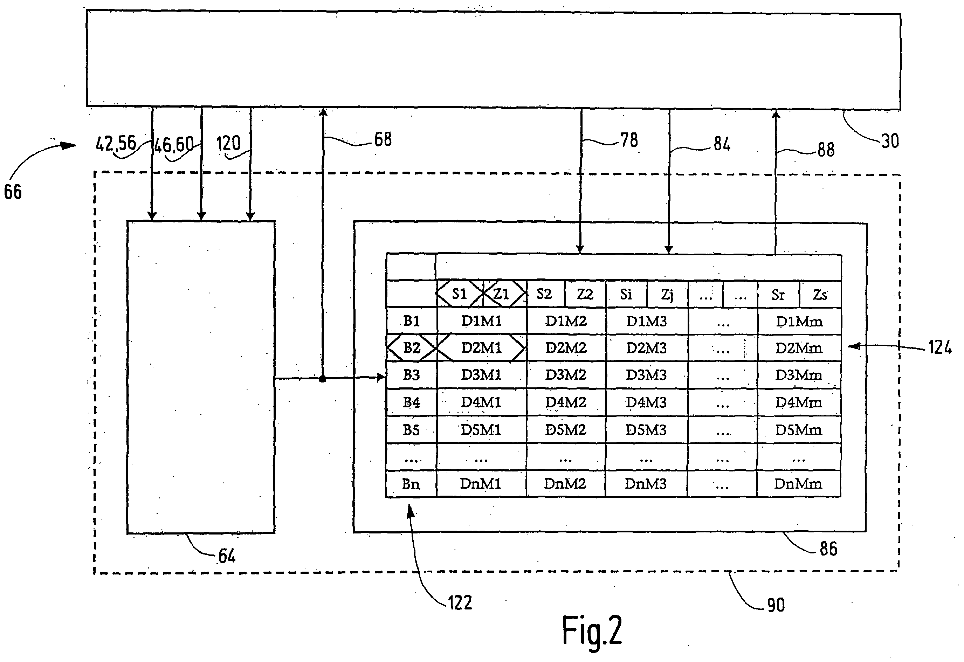

Anhand der Darstellung in Fig. 2 wird die Arbeitsweise der Diagnoseauswerteeinheit 64 und vor allem die Arbeitsweise der Diagnoseauswahleinheit 86 erklärt.

Ausgehend von der Ein-/Ausgabeeinheit 30 werden der Diagnoseauswerteeinheit 64 eine Anzahl 66 von Diagnoseeingangssignalen zugeführt. Hierbei kann es sich um folgende Signale handeln: Die sicherheitsrelevanten Steuerungseingangssignale 42 und die prozessrelevanten Steuerungseingangssignale 56; die sicherheitsrelevanten Steuerungsausgangssignale 46 und die prozessrelevanten Steuerungsausgangssignale 60 sowie weitere Signale 120. In den weiteren Signalen 120 können die Testsignale 102, das Zugriffsberechtigungssignal 84, das Sonderbetriebsartensignal 78 sowie in der Steuereinheit 22 ermittelte und in dieser verarbeitete Signale enthalten sein.

In Abhängigkeit der insgesamt zugeführten Signale stellt die Diagnoseauswerteeinheit 64 fest, welcher von mehreren Betriebszuständen 122 zu einem definierten Zeitpunkt vorliegt. Dies erfolgt durch entsprechende Auswertung der zugeführten Signale. Bei dem festgestellten Betriebszustand kann es sich um eine Prozesszustand der zu steuernden Anlage 14 oder um einen Systemzustand der Sicherheitssteuerung 22 handeln. Bei einem Systemzustand kann es sich beispielsweise um einen Kurzschluss gegen Masse oder gegen die Versorgungsspannung handeln, um einen Sensordefekt, um einen Aktordefekt, um einen Leiterbruch, um einen in der Chipkarte 36 auftretenden Fehler, um einen in einem der Prozessoren 24, 26 auftretenden Fehler oder um einen ähnlichen Fehler. Für gewöhnlich wird ein Prozesszustand der zu steuernden Anlage dadurch festgestellt, dass insbesondere die prozessrelevanten Steuerungseingangssignale 56 mit vorgegebenen Schwellenwerten verglichen werden.

Die Diagnoseauswerteeinheit 64 erzeugt ein Betriebszustandsdatensatz 68, welches den festgestellten Betriebszustand repräsentiert. Das Betriebszustandsignal 68 wird sowohl der Ein-/Ausgabeeinheit 30 als auch der Diagnoseauswahleinheit 86 zugeführt. Gemäß der Darstellung in Fig. 2 soll es sich bei dem festgestellten Betriebszustand um den Betriebszustand B2 handeln, was durch die angeschrägten Ecken angedeutet ist. In der Diagnoseauswahleinheit 86 sind für jeden der mehreren Betriebszustände 122 eine Vielzahl von untereinander unterschiedlichen Diagnosemeldungen hinterlegt. Für den festgestellten Betriebszustand B2 ist eine Vielzahl 124 von untereinander unterschiedlichen Diagnosemeldungen hinterlegt. Ausgehend von der Ein-/Ausgabeeinheit 30 werden der Diagnoseauswahleinheit 86 das Sonderbetriebsartensignal 78, welches die ausgewählte Sonderbetriebsart repräsentiert und das Zugriffsberechtigungssignal 84, welches die erfasste Zugriffsberechtigung repräsentiert, zugeführt. Im vorliegenden Fall soll es sich bei der ausgewählten Sonderbetriebsart um die Sonderbetriebsart S1 und bei der erfassten Zugriffsberechtigung um die Zugriffsberechtigung Z1 handeln, was jeweils durch die angeschrägten Ecken angedeutet ist. Demzufolge wählt die Diagnoseauswahleinheit 86 die Diagnosemeldung D2M1 aus der Vielzahl 124 von untereinander unterschiedlichen Diagnosemeldungen aus und erzeugt das Diagnosesignal 88, welches diese Diagnosemeldung repräsentiert und der Ein-/Ausgabeeinheit 30 zur Weiterleitung an die Anzeigeeinheit 72 zugeführt wird.

In der Diagnoseauswahleinheit 86 sind für jeden der mehreren Betriebszustände 122 eine Vielzahl von untereinander unterschiedlichen Diagnosemeldungen hinterlegt. Jeder der Vielzahl von untereinander unterschiedlichen Diagnosemeldungen enthält für jeden der untereinander unterschiedlichen Sonderbetriebszustände S1 bis Sr und/oder für jede der untereinander unterschiedlichen Zugriffsberechtigungen Z1 bis Zs eine jeweils zugeordnete Diagnosemeldung. Insgesamt sind in der Diagnoseauswahleinheit 86 die Diagnosemeldungen D1M1 bis DnMn für die mehreren Betriebszustände 121 B1 bis Bn hinterlegt.

Die dem Ausführungsbeispiel zugrundeliegende Ausgestaltung der Sicherheitssteuerung, gemäß der mit der Sicherheitssteuerung sowohl Steuerungsaufgaben, die dem Sicherheitssteuerungsaspekt als auch Steuerungsaufgaben, die dem Standardsteuerungsaspekt zugeordnet sind, mit ein und derselben Steuereinheit bearbeitet werden, ist für die Umsetzung der Idee der Erfindung nicht zwingend. Für beide Kategorien von Steuerungsaufgaben können auch eigenständige Steuereinheiten eingesetzt werden.

Die Anzeigeeinheit 72 kann in einem in der Anlage 14 enthaltenen Leitstand angeordnet sein. Es kann sich aber auch um eine eigenständige Anzeigeeinheit handeln. Sie kann als LCD-Bildschirm oder als alphanumerisches Textfeld ausgeführt sein.

Als Prozessdiagnosemeldung kann beispielsweise "Behälter leer" lauten. Als Systemdiagnosemeldungen kommen beispielsweise in Betracht "Speicher defekt", Kurzschluss gegen 24V" oder "Hardwarefehler".

## Patentansprüche

1. Sicherheitssteuerung zum Steuern einer automatisierten Anlage (14), die eine Vielzahl (18) von Sensoren und eine Vielzahl (16) von Aktoren umfasst,
mit einer Steuereinheit (22), der eine Vielzahl (32) von Steuerungseingangssignalen von den Sensoren zugeführt sind, wobei die Steuereinheit (22) dazu ausgebildet ist, in einem Automatikbetrieb eine Vielzahl (34) von Steuerungsausgangssignalen in Abhängigkeit von den Steuerungseingangssignalen gemäß einem in ihr ablaufenden Anwenderprogramm (38) zu erzeugen, wobei mit der Vielzahl (34) von Steuerungsausgangssignalen die Vielzahl (16) von Aktoren angesteuert werden,
mit einer Diagnoseauswerteeinheit (64), der eine Anzahl (66) von Diagnoseeingangssignalen zugeführt sind, wobei die Diagnoseauswerteeinheit (64) dazu ausgebildet ist, in Abhängigkeit von den Diagnoseseingangssignalen festzustellen, welcher von mehreren Betriebszuständen (122) zu einem definierten Zeitpunkt vorliegt, wobei die Diagnoseauswerteeinheit (64) einen Betriebszustandsdatensatz (68) erzeugt, der einen festgestellten Betriebszustand repräsentiert, wobei der Betriebszustandsdatensatz (68) eine Vielzahl von Diagnosedaten und einen booleschen Statusanzeiger aufweist, und
mit einer Schnittstelle (70) für eine Anzeigeeinheit (72), die dazu ausgebildet ist, Diagnosemeldungen mit zumindest einem Teil der Diagnosedaten anzuzeigen,
**dadurch gekennzeichnet, dass** das Anwenderprogramm (38) zumindest ein Sicherheitssteuerungsmodul (40) aufweist, in dem sicherheitsrelevante Steuerungseingangssignale (42) fehlersicher verarbeitet werden, und zumindest ein Standardsteuerungsmodul (54), in dem prozessrelevante Steuerungseingangssignale (56) verarbeitet werden, wobei die mehreren Betriebszustände (122) zumindest einen Prozesszustand der zu steuernden Anlage (14) und zumindest einen Systemzustand der Sicherheitssteuerung (12) beinhalten, wobei der Betriebszustandsdatensatz (68) den Prozesszustand und den Systemzustand repräsentiert, und wobei die Steuereinheit (22) dazu ausgebildet ist, zumindest einen Aktor in Abhängigkeit von dem booleschen Statusanzeiger anzusteuern, indem das in der Steuereinheit (22) ausgeführte Anwenderprogramm (38) auf den Betriebszustandsdatensatz (68) mit dem booleschen Statusanzeiger zugreift.

2. Sicherheitssteuerung nach Anspruch 1, **dadurch gekennzeichnet, dass** der Betriebszustandsdatensatz (68) eine Vielzahl (124) von untereinander unterschiedlichen Diagnosemeldungen beinhaltet, wobei jede dieser Diagnosemeldungen den festgestellten Betriebszustand repräsentiert.

3. Verfahren zum Steuern einer automatisierten Anlage (14), die eine Vielzahl (18) von Sensoren und eine Vielzahl (16) von Aktoren umfasst, mit den Schritten:
- Zuführen einer Vielzahl (32) von Steuerungseingangssignalen von den Sensoren zu einer Steuereinheit, wobei die Steuereinheit (22) dazu ausgebildet ist, in einem Automatikbetrieb eine Vielzahl (34) von Steuerungsausgangssignalen in Abhängigkeit von den Steuerungseingangssignalen gemäß einem in ihr ablaufenden Anwenderprogramm (38) zu erzeugen, wobei mit der Vielzahl (34) von Steuerungsausgangssignalen die Vielzahl (16) von Aktoren angesteuert werden,
- Feststellen in Abhängigkeit von einer Anzahl (66) von Diagnoseseingangssignalen, welcher von mehreren Betriebszuständen (122) zu einem definierten Zeitpunkt vorliegt, und erzeugen eines Betriebszustandsdatensatz (68), der einen festgestellten Betriebszustand repräsentiert, wobei der Betriebszustandsdatensatz (68) eine Vielzahl von Diagnosedaten und einen booleschen Statusanzeiger aufweist,
- Anzeigen von zumindest einem Teil der Diagnosedaten auf einer Anzeigeeinheit (72),
**dadurch gekennzeichnet, dass** das Anwenderprogramm (38) zumindest ein Sicherheitssteuerungsmodul (40) aufweist, in dem sicherheitsrelevante Steuerungseingangssignale (42) fehlersicher verarbeitet werden, und zumindest ein Standardsteuerungsmodul (54), in dem prozessrelevante Steuerungseingangssignale (56) verarbeitet werden, wobei die mehreren Betriebszustände (122) zumindest einen Prozesszustand der zu steuernden Anlage (14) und zumindest einen Systemzustand der Sicherheitssteuerung (12) beinhalten, wobei der Betriebszustandsdatensatz (68) den Prozesszustand und den Systemzustand repräsentiert, und wobei ein Aktor in Abhängigkeit von dem booleschen Statusanzeiger angesteuert wird, indem das in der Steuereinheit (22) ausgeführte Anwenderprogramm (38) auf den Betriebszustandsdatensatz (68) mit dem booleschen Statusanzeiger zugreift.

4. Computerprogrammprodukt mit einem Datenträger mit Programmcode, der dazu ausgebildet ist, ein Verfahren nach Anspruch 3 durchzuführen, wenn der Programmcode auf einer Sicherheitssteuerung (12) nach einem der Ansprüche 1 oder 2 abläuft.

## Claims

1. A safety controller for controlling an automated installation (14) which comprises a plurality (18) of sensors and a plurality (16) of actuators,
having a control unit (22) to which a plurality (32) of control input signals are supplied by the sensors, wherein the control unit (22) is designed to produce a plurality (34) of control output signals in an automatic mode on the basis of the control input signals in accordance with a user program (38) running in said control unit, wherein the plurality (34) of control output signals are used to actuate the plurality (16) of actuators,
having a diagnosis evaluation unit (64) to which a number (66) of diagnosis input signals are supplied, wherein the diagnosis evaluation unit (64) is designed to take the diagnosis input signals as a basis for ascertaining which of a plurality of operating states (122) is present at a defined instant of time, wherein the diagnosis evaluation unit (64) produces an operating state data record (68) which represents an ascertained operating state, wherein the operating state data record (68) has a plurality of diagnosis data and a Boolean status indicator, and
having an interface (70) for a display unit (72) which is designed to display diagnosis reports with at least a part of the diagnosis data,
**characterized in that** the user program (38) has at least one safety control module (40), in which safety-related control input signals (42) are processed in failsafe fashion, and at least one standard control module (54), in which process-related control input signals (56) are processed, wherein the plurality of operating states (122) comprise at least one process state of the installation (14) to be controlled and at least one system state of the safety controller (12), wherein the operating state data record (68) represents the process state and the system state, and wherein the control unit (22) is designed to actuate at least one actuator on the basis of the Boolean status indicator by the user program, executed in the control unit, accessing the operating state data record (68) with the Boolean status indicator.

2. The safety controller of claim 1 , **characterized in that** the operating state data record (68) comprises a plurality (124) of diagnosis reports that are different one from the another, wherein each of said diagnosis reports represents the ascertained operating state.

3. A method for controlling an automated installation (14) which comprises a plurality (18) of sensors and a plurality (16) of actuators, comprising the steps of:
- supplying a plurality (32) of control input signals from the sensors to a control unit, wherein the control unit (22) is designed to produce a plurality (34) of control output signals in an automatic mode on the basis of the control input signals in accordance with a user program (38) running in said control unit, wherein the plurality (34) of control output signals are used to actuate the plurality (16) of actuators,
- ascertaining which of a plurality of operating states (122) is present at a defined instant of time based on a number (66) of diagnosis input signals, and producing an operating state data record (68) which represents an ascertained operating state, wherein the operating state data record (68) has a plurality of diagnosis data and a Boolean status indicator,
- displaying at least some of the diagnosis data on a display unit (72),
**characterized in that** the user program (38) has at least one safety control module (40), in which safety-related control input signals (42) are processed in failsafe fashion, and at least one standard control module (54), in which process-related control input signals (56) are processed, wherein the plurality of operating states (122) comprise at least one process state of the installation (14) to be controlled and at least one system state of the safety controller (12), wherein the operating state data record (68) represents the process state and the system state, and wherein at least one actuator is driven on the basis of the Boolean status indicator by the user program, executed in the control unit, accessing the operating state data record (68) with the Boolean status indicator.

4. A computer program product comprising a data storage medium having program code which is designed to carry out a method according to claim 3 when the program code is executed on a safety controller (12) according to one of claims 1 or 2.

## Revendications

1. Commande de sécurité pour commander une installation automatisée (14), qui comprend une pluralité (18) de capteurs et une pluralité (16) d'actionneurs,
comportant une unité de commande (22), dans laquelle une pluralité (32) de signaux d'entrée de commande provenant des capteurs sont introduits, dans laquelle l'unité de commande (22) est configurée afin de générer dans un fonctionnement automatique une pluralité (34) de signaux de sortie de commande en fonction des signaux d'entrée de commande conformément à un programme d'application (38) s'exécutant dans celle-ci, dans laquelle avec la pluralité (34) de signaux de sortie de commande la pluralité (16) d'actionneurs sont commandés,
comportant une unité d'évaluation de diagnostic (64), dans laquelle un nombre (66) de signaux d'entrée de diagnostic sont introduits, dans laquelle l'unité d'évaluation de diagnostic (64) est configurée afin de déterminer, en fonction des signaux d'entrée de diagnostic, lequel de plusieurs états de fonctionnement (122) est présent à un point temporel défini, dans laquelle l'unité d'évaluation de diagnostic (64) génère un ensemble de données d'état de fonctionnement (68) qui représente un état de fonctionnement déterminé, dans laquelle l'ensemble des données d'état de fonctionnement (68) présente une pluralité de données de diagnostic et un indicateur de statut booléen, et
comportant une interface (70) pour une unité d'affichage (72), qui est configurée afin d'afficher des rapports de diagnostic avec au moins une partie des données de diagnostic, **caractérisée en ce que** le programme d'application (38) présente au moins un module de commande de sécurité (40), dans lequel des signaux d'entrée de commande significatifs pour la sécurité (42) sont traités de manière protégée contre les erreurs et au moins un module de commande standard (54) dans lequel des signaux d'entrée de commande significatifs pour le processus (56) sont traités, dans laquelle les plusieurs états de fonctionnement (122) contiennent au moins un état de processus de l'installation à commander (14) et au moins un état de système de la commande de sécurité (12), dans laquelle l'ensemble de données d'état de fonctionnement (68) représente l'état de processus et l'état de système, et dans laquelle l'unité de commande (22) est configurée afin de commander au moins un actionneur en fonction de l'indicateur de statut booléen, **en ce que** le programme d'application (38) exécuté dans l'unité de commande (22) accède à l'ensemble de données d'état de fonctionnement (68) avec l'indicateur de statut booléen.

2. Commande de sécurité selon la revendication 1, **caractérisée en ce que** l'ensemble de données d'état de fonctionnement (68) contient une pluralité (124) de rapports de diagnostic différents les uns des autres, dans laquelle chacun de ces rapports de diagnostic représente l'état de fonctionnement déterminé.

3. Procédé de commande d'une installation automatisée (14), qui comprend une pluralité (18) de capteurs et une pluralité (16) d'actionneurs, comportant les étapes consistant à :
- introduire une pluralité (32) de signaux d'entrée de commande provenant des capteurs dans une unité de commande, dans lequel l'unité de commande (22) est configurée afin de générer dans un fonctionnement automatique une pluralité (34) de signaux de sortie de commande en fonction des signaux d'entrée de commande conformément à un programme d'application (38) s'exécutant dans celle-ci, dans lequel avec la pluralité (34) de signaux de sortie de commande la pluralité (16) d'actionneurs sont commandés,
- déterminer en fonction d'un nombre (66) de signaux d'entrée de diagnostic, lequel de plusieurs états de fonctionnement (122) est présent à un point temporel défini, et générer un ensemble de données d'état de fonctionnement (68), qui représente un état de fonctionnement déterminé, dans lequel l'ensemble des données d'état de fonctionnement (68) présente une pluralité de données de diagnostic et un indicateur de statut booléen,
- afficher au moins une partie des données de diagnostic sur une unité d'affichage (72), **caractérisé en ce que** le programme d'application (38) présente au moins un module de commande de sécurité (40), dans lequel des signaux d'entrée de commande significatifs pour la sécurité (42) sont traités de manière protégée contre les erreurs et au moins un module de commande standard (54) dans lequel des signaux d'entrée de commande significatifs pour le processus (56) sont traités, dans lequel les plusieurs états de fonctionnement (122) contiennent au moins un état de processus de l'installation à commander (14) et au moins un état de système de la commande de sécurité (12), dans lequel l'ensemble de données d'état de fonctionnement (68) représente l'état de processus et l'état de système, et dans lequel un actionneur est commandé en fonction de l'indicateur de statut booléen, **en ce que** le programme d'application (38) exécuté dans l'unité de commande (22) accède à l'ensemble de données d'état de fonctionnement (68) avec l'indicateur de statut booléen.

4. Produit de programme informatique comportant un support de données avec un code de programme qui est configuré afin de mettre en œuvre un procédé selon la revendication 3, lorsque le code de programme s'exécute sur une commande de sécurité (12) selon une des revendications 1 ou 2.
